# EUROPÄISCHE PATENTANMELDUNG

(11) **EP 1 411 302 A2**
(43) Veröffentlichungstag der Anmeldung: **21.04.2004**
(21) Anmeldenummer: 03023632.7
(22) Anmeldetag: 16.10.2003
(51) Int. Cl.: F24D 3/10, F24D 19/10

(54) **Ventilanordnung für eine Fussbodenheizung**

(30) Priorität: 16.10.2002 DE 20215891 U
(71) Anmelder: AFRISO Euro-Index GmbH für Sicherungsarmaturen und Füllstandsmessung, 74363 Güglingen (DE)
(72) Erfinder: Bühler, Thomas, 74397 Pfaffenhofen (DE)
(74) Vertreter: KOHLER SCHMID + PARTNER

(57) **Zusammenfassung**

Eine Ventilanordnung in einer Verteilerleitung (2) einer Fußbodenheizung umfasst ein Entlüftungsventil (3) zum Entlüften der Verteilerleitung (2), einen Anschlussstutzen (4) zum Entleeren und Befüllen der Verteilerleitung (2), ein zwischen Anschlussstutzen (4) und Verteilerleitung (2) angeordnetes Absperrventil (5) und ein Ventilgehäuse (6), an dem das Entlüftungsventil (3), das Absperrventil (5) und der Anschlussstutzen (4) vorgesehen sind, wobei erfindungsgemäß am Ventilgehäuse (6) der Anschlussstutzen (4) und/oder ein Gehäuseabschnitt (8) des Entlüftungsventils (3) und/oder ein Gehäuseabschnitt (9) des Absperrventils (5) ausgebildet sind.

## Beschreibung

Die Erfindung betrifft eine Ventilanordnung in einer Verteilerleitung einer Fußbodenheizung mit einem Entlüftungsventil zum Entlüften der Verteilerleitung, mit einem Anschlussstutzen zum Entleeren und Befüllen der Verteilerleitung, mit einem zwischen Anschlussstutzen und Verteilerleitung angeordneten Absperrventil und mit einem Ventilgehäuse, an dem das Entlüftungsventil, das Absperrventil und der Anschlussstutzen vorgesehen sind.

Bekannte Ventilanordnungen dieser Art sind an einem Metallprofil (Strangpressprofil) vorgesehen, das die Verteilerleitung bildet und endseitig mit einer Verschlussschraube abgeschlossen ist. An diesem Metallprofil sind oben die Verteilerventile der einzelnen, unten von der Verteilerleitung abgehenden Heizkreise der Fußbodenheizung eingesetzt. Das als Entlüftungsstopfen ausgebildete Entlüftungsventil ist ein komplett montiertes Teil, das oben in eine Gewindeöffnung des Metallprofils eingeschraubt ist. Der Anschlussstutzen und das Absperrventil zusammen sind ebenfalls ein komplett montiertes Teil, das unten in eine Gewindeöffnung des Metallprofils eingeschraubt ist. Diese komplett montierten Teile müssen als separate Fertigteile zugekauft werden, was die Herstellungskosten der Ventilanordnung erhöht.

Der Erfindung liegt daher die Aufgabe zugrunde, bei einer Ventilanordnung der eingangs genannten Art die Herstellungskosten zu reduzieren.

Diese Aufgabe wird erfindungsgemäß dadurch gelöst, dass am Ventilgehäuse der Anschlussstutzen und/oder ein Gehäuseabschnitt des Entlüftungsventils und/oder ein Gehäuseabschnitt des Absperrventils ausgebildet sind.

Erfindungsgemäß ist das Ventilgehäuse bereits integral mit dem Anschlussstutzen und mit Gehäuseabschnitten des Entlüftungs- und des Absperrventils ausgebildet.

Vorzugsweise sind am Ventilgehäuse auch bereits die Ventilsitze oder -öffnungen des Entlüftungs- und des Absperrventils ausgebildet, mit denen beispielsweise Ventilspindeln zusammenwirken können, welche in den Gehäuseabschnitten beweglich gelagert und vorzugsweise verliersicher gehalten sind.

Bei bevorzugten Ausführungsformen der Erfindung ist die Ventilspindel des Entlüftungsventils dem Anschlussstutzen gegenüberliegend und kollinear zur Achse des Anschlussstutzens angeordnet, während die Ventilspindel des Absperrventils parallel zur Längsachse der Verteilerleitung angeordnet ist.

Vorzugsweise schließt das Ventilgehäuse die Verteilerleitung endseitig ab, so dass im Gegensatz zu bekannten Ventilanordnungen eine Verschlussschraube nicht erforderlich ist.

Das Ventilgehäuse ist vorteilhafterweise einstückig als Kunststoffteil, insbesondere als Spritzgussteil, oder als Metallteil ausgebildet.

Bei bevorzugten Ausführungsformen der Erfindung weist das Gehäuse einen Gewindeanschluss zum Anschrauben an die Verteilerleitung auf. Bei anderen bevorzugten Ausführungsformen ist das Gehäuse integral mit einem Leitungsabschnitt der Verteilerleitung ausgebildet, an dem dann vorzugsweise auch die Verteilerventile der einzelnen von der Verteilerleitung abgehenden Heizkreise vorgesehen sind.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine erste Ausführungsform der erfindungsgemäßen Ventilanordnung;
- Fig. 2: einen Längsschnitt der in Fig. 1 gezeigten Ventilanordnung;
- Fig. 3: eine zweite Ausführungsform der erfindungsgemäßen Ventilanordnung; und
- Fig. 4: einen Längsschnitt der in Fig. 3 gezeigten Ventilanordnung.

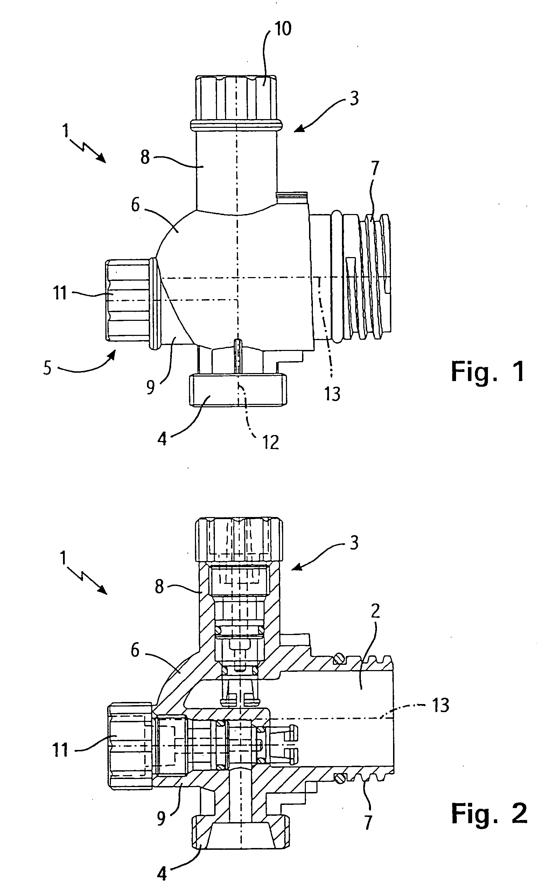

Die in **Fig. 1** und **Fig. 2** gezeigte Ventilanordnung **1** ist an einer Verteilerleitung **2** einer Fußbodenheizung vorgesehen und dient zum Entlüften, Entleeren und Befüllen der Verteilerleitung 2. Dazu weist die Ventilanordnung 1 ein Entlüftungsventil **3**, einen Anschlussstutzen **4** und ein zwischen Anschlussstutzen **4** und Verteilerleitung 2 angeordnetes Absperrventil **5** auf, die alle am Ventilgehäuse **6** angeordnet sind. Das Ventilgehäuse 6 schließt die Verteilerleitung 2 endseitig ab und hat einen Gewindeanschluss **7**, mit dem es an einen entsprechenden Gewindeanschluss der Verteilerleitung 2 angeschraubt wird. Das Gehäuse 6 ist einstückig z.B. als Spritzgussteil aus Kunststoff oder als Metallteil ausgebildet.

Integral am Ventilgehäuse 6 sind der Anschlussstutzen 4 sowie rohrförmige Gehäuseabschnitte **8, 9** des Entlüftungsventils 3 und des Absperrventils 5 ausgebildet. Im Gehäuseabschnitt 8 des Entlüftungsventils 3 ist eine Ventilspindel **10** eingeschraubt, die mit einem am Ventilgehäuse 6 ausgebildeten Ventilsitz zusammenwirkt. Im Gehäuseabschnitt 9 des Absperrventils 5 ist eine Ventilspindel **11** eingeschraubt, die mit einer am Ventilgehäuse 6 ausgebildeten Ventilöffnung zusammenwirkt. Bei der Montage der Ventilanordnung 1 werden die beiden Ventilspindeln 10, 11 in die Gehäuseabschnitte 8, 9 eingesteckt und bis in ihre Ventilposition eingeschraubt. Dort sind die beiden Ventilspindeln 10, 11 am Ventilgehäuse 6 verliersicher gehalten.

In der gezeigten Einbaulage der Ventilanordnung 1 ist das Entlüftungsventil 3 mit seiner Ventilspindel 10 oben und der Anschlussstutzen 4 unten angeordnet, wobei die Ventilspindel 10 und die Längsachse **12** des Anschlussstutzens 4 kollinear zueinander und vertikal, also rechtwinklig zur horizontalen Längsachse **13** der Verteilerleitung 2, verlaufen. Die Ventilspindel 11 des Absperrventils 5 ist am Ventilgehäuse 6 gegenüberliegend dem Gewindeanschluss 7 und parallel zur Längsachse 13 der Verteilerleitung 2 angeordnet.

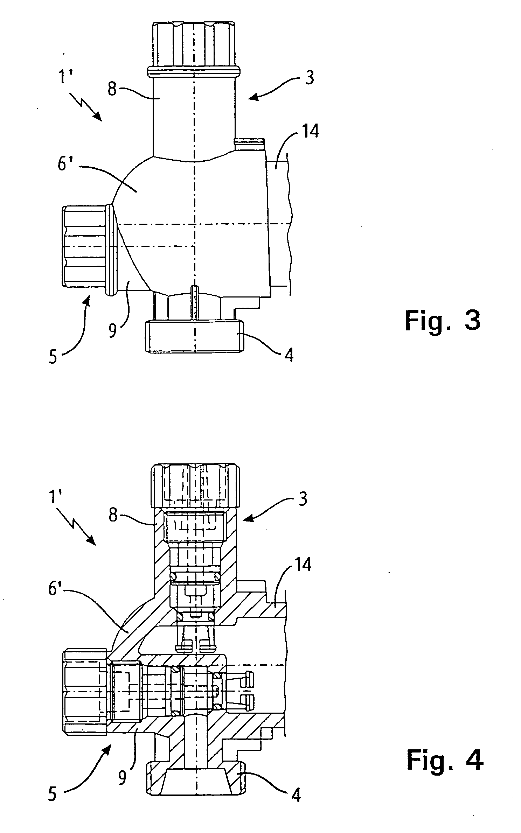

Von der Ventilanordnung 1 unterscheidet sich die in **Fig. 3** und **Fig. 4** gezeigte Ventilanordnung **1'** nur dadurch, dass das Gehäuse **6'** integral mit einem Leitungsabschnitt **14** der Verteilerleitung 2 ausgebildet ist. An diesem Leitungsabschnitt 14 sind vorzugsweise die Verteilerventile (nicht gezeigt) der einzelnen von der Verteilerleitung 2 abgehenden Heizkreise vorgesehen.

## Patentansprüche

1. Ventilanordnung (1; 1') in einer Verteilerleitung (2) einer Fußbodenheizung, mit einem Entlüftungsventil (3) zum Entlüften der Verteilerleitung (2), mit einem Anschlussstutzen (4) zum Entleeren und Befüllen der Verteilerleitung (2), mit einem zwischen Anschlussstutzen (4) und Verteilerleitung (2) angeordneten Absperrventil (5) und mit einem Ventilgehäuse (6; 6'), an dem das Entlüftungsventil (3), das Absperrventil (5) und der Anschlussstutzen (4) vorgesehen sind,
**dadurch gekennzeichnet,**
**dass** am Ventilgehäuse (6; 6') der Anschlussstutzen (4) und/oder ein Gehäuseabschnitt (8) des Entlüftungsventils (3) und/oder ein Gehäuseabschnitt (9) des Absperrventils (5) ausgebildet sind.

2. Ventilanordnung nach Anspruch 1, **dadurch gekennzeichnet, dass** am Ventilgehäuse (6; 6') der Ventilsitz oder die Ventilöffnung des Entlüftungsventils (3) und/oder der Ventilsitz oder die Ventilöffnung des Absperrventils (5) ausgebildet sind.

3. Ventilanordnung nach Anspruch 1 oder 2, **dadurch gekennzeichnet, dass** im Gehäuseabschnitt (8) des Entlüftungsventils (3) eine Ventilspindel (10) beweglich gelagert ist.

4. Ventilanordnung nach Anspruch 3, **dadurch gekennzeichnet, dass** die Ventilspindel (10) des Entlüftungsventils (3) am Ventilgehäuse (6; 6') verliersicher gehalten ist.

5. Ventilanordnung nach Anspruch 3 oder 4, **dadurch gekennzeichnet, dass** die Ventilspindel (10) des Entlüftungsventils (3) dem Anschlussstutzen (4) gegenüberliegend und kollinear zur Achse (12) des Anschlussstutzens (4) angeordnet ist.

6. Ventilanordnung nach einem der vorhergehenden Ansprüche, **dadurch gekennzeichnet, dass** im Gehäuseabschnitt (9) des Absperrventils (5) eine Ventilspindel (11) beweglich gelagert ist.

7. Ventilanordnung nach Anspruch 6, **dadurch gekennzeichnet, dass** die Ventilspindel (11) des Absperrventils (5) am Ventilgehäuse (6; 6') verliersicher gehalten ist.

8. Ventilanordnung nach Anspruch 6 oder 7, **dadurch gekennzeichnet, dass** die Ventilspindel (11) des Absperrventils (5) parallel zur Längsachse (13) der Verteilerleitung (2) angeordnet ist.

9. Ventilanordnung nach einem der vorhergehenden Ansprüche, **dadurch gekennzeichnet, dass** das Ventilgehäuse (6; 6') die Verteilerleitung (2) endseitig abschließt.

10. Ventilanordnung nach einem der vorhergehenden Ansprüche, **dadurch gekennzeichnet, dass** das Ventilgehäuse (6; 6') einstückig ausgebildet ist.

11. Ventilanordnung nach einem der vorhergehenden Ansprüche, **dadurch gekennzeichnet, dass** das Ventilgehäuse (6; 6') ein Kunststoffteil, insbesondere ein Spritzgussteil, oder ein Metallteil ist.

12. Ventilanordnung nach einem der vorhergehenden Ansprüche, **dadurch gekennzeichnet, dass** das Ventilgehäuse (6) einen Gewindeanschluss (7) zum Anschrauben an die Verteilerleitung (2) aufweist.

13. Ventilanordnung nach einem der Ansprüche 1 bis 11, **dadurch gekennzeichnet, dass** das Ventilgehäuse (6') integral mit einem Leitungsabschnitt (14) der Verteilerleitung (2) ausgebildet ist.

14. Ventilanordnung nach Anspruch 13, **dadurch gekennzeichnet, dass** an dem Leitungsabschnitt (14) Verteilerventile der einzelnen von der Verteilerleitung (2) abgehenden Heizkreise vorgesehen sind.
